# EUROPÄISCHE PATENTANMELDUNG

(11) **EP 1 596 061 A2**
(43) Veröffentlichungstag der Anmeldung: **16.11.2005**
(21) Anmeldenummer: 05009929.0
(22) Anmeldetag: 06.05.2005
(51) Int. Cl.: F02N 15/02, F16H 55/17

(54) **Anlasserzahnkranz sowie Schwungrad mit einem derartigen Anlasserzahnkranz**

(30) Priorität: 12.05.2004 DE 102004023895
(71) Anmelder: LuK Lamellen und Kupplungsbau Beteiligungs KG, 77815 Bühl (DE)
(72) Erfinder: Reder, Reinhold, 76185 Karlsruhe (DE); Jäckel, Johann, 77830 Bühlertal (DE)

(57) **Zusammenfassung**

Die Erfindung betrifft einen Anlasserzahnkranz mit einem ringförmigen Grundkörper, der am äußeren Umfang eine Verzahnung angeformt hat, wobei das die Verzahnung bildende Material zumindest an der Oberfläche eine höhere Härte aufweist als das zumindest den Kern des ringförmigen Grundkörpers bildende Material.

## Beschreibung

Die Erfindung betrifft einen Anlasserzahnkranz bzw. ein mit einem derartigen Anlasserzahnkranz versehenes Schwungrad.

Anlasserzahnkränze bzw. Schwungräder sind beispielsweise in der DE 37 45 090 C2 beschrieben und dargestellt. Solche Anlasserzahnkränze werden üblicherweise auf das Schwungrad aufgeschrumpft und/oder aufgepresst, wobei hierfür das Schwungrad eine entsprechende Aufnahmeschulter, auf der die radial innere Begrenzungsfläche des Anlasserzahnkranzes aufgenommen wird, aufweist.

Bei der Auslegung von Schwungrädern für Motoren mit hohen Drehzahlen ist die erzielbare Berstdrehzahl ein wichtiges Auslegekriterium sowohl für das Schwungrad selbst als auch für den Anlasserzahnkranz.

Die Berstfestigkeit eines Zahnkranzes kann durch entsprechende Formgebung des Anlasserzahnkranzes, also beispielsweise durch entsprechende radiale Dimensionierung, beeinflusst werden. Im modernen Motorenbau sind jedoch die für die einzelnen Bauteile zur Verfügung gestellten Bauräume sehr eng, so dass der Anlasserzahnkranz nicht beliebig groß dimensioniert werden kann.

Der vorliegenden Erfindung lag die Aufgabe zugrunde, einen Anlasserzahnkranz zu schaffen, der gegenüber den bisher bekannten eine höhere Berstfestigkeit gewährleistet, wobei diese Berstfestigkeit in Bezug auf den jeweils eingesetzten Werkstoff zu betrachten ist. Der erfindungsgemäße Anlasserzahnkranz soll weiterhin in besonders kostengünstiger Weise herstellbar sein.

Bei einem Anlasserzahnkranz mit einem ringförmigen Grundkörper, der am äußeren Umfang eine Verzahnung angeformt hat, wobei das die Verzahnung bildende Material zumindest an der Oberfläche eine höhere Härte aufweist als das zumindest den Kern des ringförmigen Grundkörpers bildende Material, wird dies gemäß der Erfindung dadurch erzielt, dass das an die radial innere, ringförmige Begrenzungsfläche des Anlasserzahnkranzes angrenzende Material eine höhere Festigkeit aufweist, als das zumindest den Kern des ringförmigen Grundkörpers bildende Material.

Durch die erfindungsgemäße Ausgestaltung des Zahnkranzes wird einerseits gewährleistet, dass die Oberfläche der Verzahnung eine ausreichende Härte aufweist, um eine hohe Lebensdauer zu gewährleisten, und andererseits der ringförmige Grundkörper zumindest im Kernbereich eine ausreichende Zähigkeit aufweist, die gewährleistet, dass kein Bruch zwischen den gehärteten Bereichen der Verzahnung und diesem Grundkörper auftritt. Darüber hinaus wird aber durch die höhere Festigkeit des ringförmigen Grundkörpers zumindest an seinem radial inneren Bereich die Berstfestigkeit wesentlich erhöht.

Versuche mit einem Zahnkranz haben gezeigt, dass mittels der Erfindung die Berstdrehzahl von ca. 14.000 ¹/min auf ca. 19.000 ¹/min gesteigert werden kann.

In vorteilhafter Weise kann die höhere Festigkeit am radial inneren Bereich des Anlasserzahnkranzes durch Härten bzw. Vergüten erzielt werden.

Obwohl es zweckmäßig sein kann, das Härten der Außenverzahnung gleichzeitig mit dem Härten des inneren Bereiches des Anlasserzahnkranzes vorzunehmen, ist es für viele Anwendungsfälle vorteilhaft, wenn die beiden Härtevorgänge voneinander getrennt sind, also nacheinander stattfinden. Dabei kann es besonders zweckmäßig sein, wenn zuerst die Zähne gehärtet werden und erst danach der radial innere Bereich des Anlasserzahnkranzes auf eine höhere Festigkeit gebracht wird. Durch die Anwendung getrennter Fertigungsschritte können die gewünschten Materialeigenschaften im Bereich der Verzahnung und im radial inneren Bereich des Grundkörpers unabhängig voneinander gezielt eingestellt werden. Dabei kann es zweckmäßig sein, wenn der radial innere Bereich des Grundkörpers des Anlasserzahnkranzes trotz einer höheren Festigkeit auch eine ausreichend hohe Zähigkeit besitzt, um Spannungsrisse zu vermeiden. Die Trennung der vorerwähnten Fertigungsschritte hat den Vorteil, dass die Verzahnung in üblicher Weise hergestellt und vergütet werden kann und die bereits vorhandenen Fertigungsmittel weiterhin benutzt werden können.

Die radiale Tiefe des am radial inneren Bereich des Anlasserzahnkranzes gehärteten bzw. vergüteten Materials kann an die jeweils vorhandene, radiale Erstreckung bzw. Dimensionierung des Anlasserzahnkranzes angepasst werden. Es soll jedoch stets gewährleistet sein, dass zwischen diesen, zum Beispiel durch Vergüten oder Härten auf eine höhere Festigkeit gebrachten, radial inneren Bereichen des Anlasserzahnkranzes und den gehärteten Verzahnungsbereichen ein Zwischenbereich mit einer höheren Zähigkeit bzw. geringeren Härte verbleibt.

Anhand der Figuren sei die Erfindung näher erläutert.

Dabei zeigt:
- Figur 1: einen Anlasserzahnkranz in Ansicht,
- Figur 2: die Einzelheit "Z" gemäß Figur 1 und
- Figur 3: einen Schnitt gemäß der Linie III-III der Figur 1.

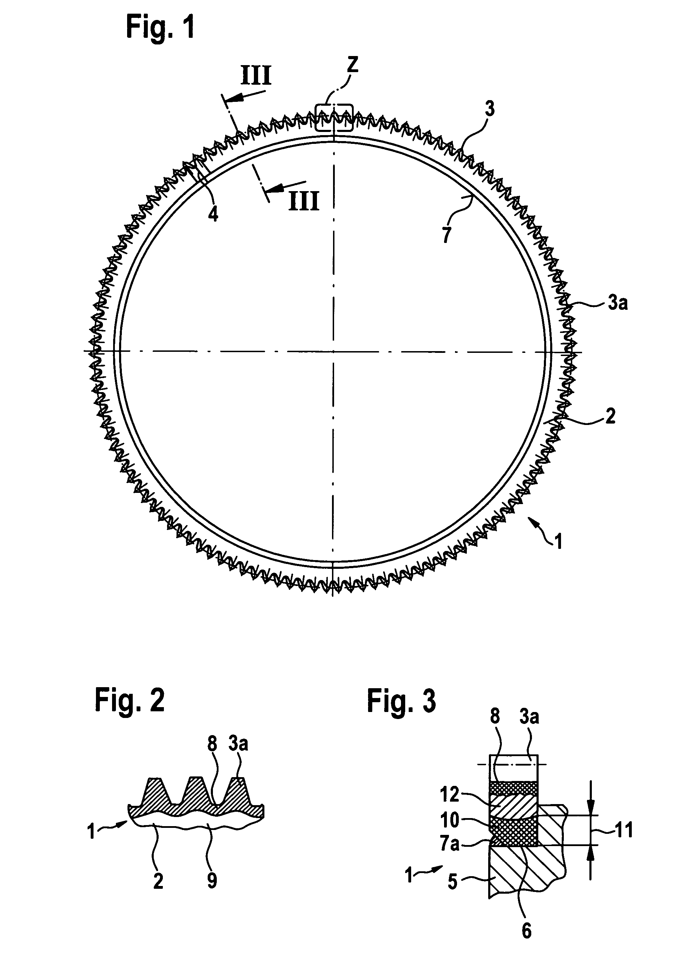

Der in Figur 1 dargestellte Anlasserzahnkranz 1 besitzt einen ringförmigen Grundkörper 2, der an seinem radial äußeren Umfang eine Verzahnung 3 angeformt hat. Diese Verzahnung 3 kann durch spanabhebende Bearbeitung oder aber auch durch Materialverdrängung bzw. Fließpressen hergestellt sein.

Bei dem dargestellten Ausführungsbeispiel ist der Anlasserzahnkranz aus einer ursprünglich geraden Zahnstange hergestellt, welche in die entsprechende Form rolliert wurde. Die sich in Umfangsrichtung gegenüberliegenden Stirnflächen der ursprünglich geraden Stange sind über eine Verschweißung, vorzugsweise über eine Stumpfverschweißung 4, miteinander verbunden. Der Anlasserzahnkranz 1 kann jedoch auch aus einer unverzahnten Stange hergestellt werden, die zunächst zu einem Ring geformt wird. Diesem Ring kann dann die Verzahnung 3 in der bereits erwähnten Art und Weise angeformt werden.

Der aus einem vergütbaren bzw. härtbaren Stahl hergestellte Anlasserzahnkranz 1 wird in an sich bekannter Weise mit einem Schwungrad 5, das in Figur 3 teilweise und lediglich schematisch dargestellt ist, verbunden. Hierfür kann das Schwungrad 5 eine eine ringförmige Fläche bildende Schulter 6 besitzen, auf die der Anlasserzahnkranz aufgeschrumpft und/oder aufgepresst wird, so dass die ringförmige Innenfläche 7 auf der Schulter 6 mit radialer Vorspannung aufsitzt, und zumindest ein Teil des Anlasserdrehmomentes durch die dadurch gebildete, kraftschlüssige Verbindung übertragen werden kann. Sofern erforderlich, kann über den Umfang des Anlasserzahnkranzes 1 betrachtet eine Schweißverbindung 7a vorgesehen werden, die sich auch nur über Teilbereiche dieses Umfanges sektorfömig erstrecken kann.

Als Werkstoff zur Herstellung des Anlasserzahnkranzes 1 kann beispielsweise C35 oder C45 oder ein Chrom-Nickelstahl wie z. B. 42CrMoS4 benutzt werden.

Wie aus Figur 2 zu entnehmen ist, sind bei dem dargestellten Ausführungsbeispiel die die Verzahnung 3 bildenden Zähne 3a voll vergütet, wobei sie hierfür beispielsweise zuerst durchgehärtet und danach angelassen werden können, wodurch auch evtl. vorhandene Spannungen zumindest teilweise abgebaut werden. Aus Figur 3 ist der Verlauf der gehärteten Zone ersichtlich, wobei der Übergang zwischen der gehärteten, schraffiert dargestellten Zone 8 und der radial weiter innen liegenden, eine höhere Zähigkeit aufweisenden Zone 9 des Anlasserzahnkranzes 1 idealisiert dargestellt ist. Tatsächlich ist zwischen den beiden Zonen 8 und 9 ein Übergangsbereich vorhanden.

In vorteilhafter Weise können die Zähne 3a induktiv gehärtet sein, was beispielsweise mittels entsprechend ausgestalteter Härtespulen erfolgen kann.

Obwohl bei dem dargestellten Ausführungsbeispiel die Verzahnung 3 bzw. die diese bildenden Zähne 3a voll gehärtet bzw. vergütet sind, kann es für viele Anwendungsfälle auch zweckmäßig sein, wenn die Randbereiche der Verzahnung 3 eine entsprechende Behandlung aufweisen, die Härtetiefe kann dabei lediglich einige Zehntel Millimeter, zum Beispiel zwischen 0,3 und 1 mm betragen. Falls notwendig, kann die Härtetiefe jedoch auch größer sein.

Durch die zumindest äußerliche, höhere Härte der Verzahnung 3 kann der im Betrieb auftretende Verschleiß erheblich reduziert werden.

Durch den Verbleib einer radial weiter innen liegenden Zone 9 an zähem Material wird gewährleistet, dass eine bruchsichere Verbindung zwischen den Zähnen 3a und dem ringförmigen Grundkörper 2 gegeben ist.

Wie aus Figur 3 zu entnehmen ist, besitzt der Anlasserzahnkranz 1 an seinem radial inneren Randbereich eine weitere, eine höhere Festigkeit aufweisende Zone 10. Diese Zone 10 kann ebenfalls gehärtet bzw. vergütet sein, und zwar in ähnlicher Weise, wie dies in Zusammenhang mit den Zähnen 3a erwähnt wurde.

Die radiale Tiefe 11 der ringförmigen Zone 10 ist dabei derart bemessen, dass zwischen dieser Zone 10 und der ringförmigen Zone 8 ein ringförmiger Bereich 12 verbleibt, der eine wesentlich höhere Zähigkeit besitzt als die Zonen 8 und 10. Der ringförmige Bereich 12 soll also vorzugsweise keine Härtung erfahren oder aber nur eine solche, die eine ausreichende Zähigkeit gewährleistet, um einen Bruch der Zähne 3a zu vermeiden.

Für manche Anwendungsfälle kann es zweckmäßig sein, dass auch die axial seitlichen Flanken des Bereiches 12 über eine geringe Tiefe eine höhere Festigkeit besitzen, wobei hierfür eine gehärtete bzw. vergütete Randschicht erzeugt werden kann. Eine derartige Ausgestaltung kann insbesondere dann vorteilhaft sein, wenn, wie bereits beschrieben, die Verzahnung 3 bzw. Zähne 3a nicht durchgehend bzw. voll gehärtet sind, so dass die Zähne 3a selbst einen zumindest geringen Kernbereich besitzen, der eine gewisse Zähigkeit aufweist.

### Bezugszeichenliste

- 1: Anlasserzahnkranz
- 2: ringförmiger Grundkörper
- 3: Verzahnung
- 3a: Zähne
- 4: Verschweißung
- 5: Schwungrad
- 6: Schulter
- 7: ringförmige Innenfläche
- 7a: Schweißverbindung
- 8: ringförmige Zone
- 9: ringförmige Zone
- 10: ringförmige Zone
- 11: radiale Tiefe
- 12: ringförmiger Bereich

## Patentansprüche

1. Anlasserzahnkranz mit einem ringförmigen Grundkörper, der am äußeren Umfang eine Verzahnung angeformt hat, wobei das die Verzahnung bildende Material zumindest an der Oberfläche eine höhere Härte aufweist als das zumindest den Kern des ringförmigen Grundkörpers bildende Material, **dadurch gekennzeichnet, dass** das an die radial innere, ringförmige Begrenzungsfläche des Anlasserzahnkranzes angrenzende Material eine höhere Festigkeit aufweist, als das zumindest den Kern des ringförmigen Grundkörpers bildende Material.

2. Anlasserzahnkranz nach Anspruch 1, **dadurch gekennzeichnet, dass** das die Außenverzahnung bildende Material sowie das die ringförmige Innenfläche bildende Material vergütet sind.

3. Anlasserzahnkranz nach Anspruch 1, **dadurch gekennzeichnet, dass** das die Außenverzahnung bildende Material sowie das die ringförmige Innenfläche bildende Material gehärtet sind.

4. Anlasserzahnkranz nach einem der vorhergehenden Ansprüche, **dadurch gekennzeichnet, dass** der Anlasserzahnkranz an seinem radial inneren Bereich induktiv randschichtgehärtet ist.

5. Anlasserzahnkranz nach wenigstens einem der vorhergehenden Ansprüche, **dadurch gekennzeichnet, dass** der Anlasserzahnkranz an seinem radial inneren Bereich nach dem Härten angelassen ist.

6. Anlasserzahnkranz nach einem der vorhergehenden Ansprüche, **dadurch gekennzeichnet, dass** die Härte- bzw. Vergütungstiefe am radial inneren Bereich des Anlasserzahnkranzes 1 bis 3 mm beträgt.

7. Anlasserzahnkranz nach einem der vorhergehenden Ansprüche, **dadurch gekennzeichnet, dass** zwischen den die Außenverzahnung bildenden, gehärteten Zonen und dem gehärteten, radial inneren Bereich des Anlasserzahnkranzes eine Materialzone mit höherer Zähigkeit verbleibt.

8. Schwungrad mit einer darauf befestigten Reibungskupplung zur Verwendung in Verbindung mit einem Kraftfahrzeug, **dadurch gekennzeichnet, dass** das Schwungrad einen Anlasserzahnkranz trägt, der nach wenigstens einem der Ansprüche 1 bis 7 ausgebildet ist.
